# EUROPÄISCHE PATENTSCHRIFT

(11) **EP 0 950 487 B1**
(45) Veröffentlichungstag und Bekanntmachung des Hinweises auf die Patenterteilung: **05.09.2001**
(21) Anmeldenummer: 98104424.1
(22) Anmeldetag: 12.03.1998
(51) Int. Cl.: B29C 35/06

(54) **Anlage zur Wärmebehandlung von Produkten aus Elastomermaterial**
Apparatus for heat treating elastomeric articles
Installation pour traiter des produits en matière élastomère par chauffage

(43) Veröffentlichungstag der Anmeldung: 20.10.1999
(73) Patentinhaber: Paul Troester Maschinenfabrik, D-30519 Hannover (DE)
(72) Erfinder: Rottstedt, Peter, Ing., 30938 Burgwedel (DE); Skubich, Rolf, Dipl.-Ing., 30853 Langenhagen (DE)
(74) Vertreter: Junius, Walther, Dr.

(56) Entgegenhaltungen:
- EP-A- 0 560 214
- FR-A- 2 216 378
- FR-A- 2 487 249
- GB-A- 161 648
- US-A- 1 727 964
- US-A- 2 389 038
- PATENT ABSTRACTS OF JAPAN vol. 006, no. 124 (M-141), 9.Juli 1982 & JP 57 049547 A (TOYODA GOSEI CO LTD), 23.März 1982,

## Beschreibung

Die Erfindung betrifft eine Anlage zur Wärmebehandlung von Produkten aus Elastomermaterial, insbesondere zur Vulkanisation von strangförmigen Kautschukmischungen, bestehend aus einer langgestreckten beheizten Wanne zur Aufnahme einer als Wärmeüberträger dienenden Flüssigkeit oder Schmelze, die mit Führungs- und/ oder Transportmitteln (5) für das zu behandelnde Produkt ausgerüstet ist.

Eine solche Anlage ist aus der EP 0560 214 A bekannt geworden. Sie wird vornehmlich in der Fabrikation von Gummiprofilsträngen, die z.B. als Dichtungen von Fenstern, Türen, aber auch als Schläuche etc. Anwendung finden, eingesetzt. Diese aus Kautschukmischungen hergestellten Produkte müssen nach Verlassen des Extruders teilweise unter Luftabschluß vulkanisiert werden. Diese Vulkanisation erfolgt in einem Bad aus geschmolzenem Salz oder organischen Stoffen, die recht aggressiv sein können, wenn sie das Bad verlassen. Bei dieser bekannten Anlage erfolgt die Beheizung der Wanne durch Warmluft, welche unter dem Boden und längs der Seitenwände an der Wanne entlangstreicht und das in der Wanne befindliche Salz schmilzt und dann in geschmolzenen Zustand hält. Diese Beheizung mit Heißluft war ein erheblicher technischer Fortschritt gegenüber früheren Beheizungsarten mit in und/oder an der Wanne befindlichen elektrischen Heizkörpern oder mit von heißem Öl durchströmten Heizschlangen und/oder Kammern.

Diese indirekten Beheizungsarten wurden gewählt, um eine möglichst hohe Betriebssicherheit zu erreichen und damit Unfälle durch Leckagen oder einen Bruch der sehr langen und mit einem durch die Erhitzung aggressiven Medium gefüllte Wanne zu vermeiden und nicht zu einer Gefahr werden zu lassen.

Die indirekte Beheizung der Wanne hat Nachteile: Notwendige Temperaturänderungen während des Betriebes stellen sich sehr langsam ein, es wird mehr Energie verbraucht als dem Bad zugeführt wird, Rohrsysteme im Bad sind der Korrosion ausgesetzt, behindern den freien Durchgang, erschweren das Sauberhalten und neigen zu Defekten, selbst die moderne Heißluftbeheizung hat den Nachteil, daß Wärmegradienten im Bad sich nicht vermeiden lassen, weil die Heißluft in Längsrichtung des Bades strömt und weil sich der Wärmebedarf mit unterschiedlichen zu vulkanisierenden Profilen und über die Länge des Bades ändert.

Eine direkte Beheizung mittels Gasbrennern hat man bei diesen langgestreckten Wannen nicht ausgeführt, weil die Gefahr eines Reißens der Wandungen oder des Bodens der Wanne und eines Ausströmens des meist aggressiven Bades zu groß war. Eine solche direkte Beheizung mittels eines unter dem Boden der Wanne stehenden Gasbrenners ist aus der GB 161 648 A, der US 17 27 964 A und der US 23 89 038 bekannt geworden, wo wegen der kurzen, gedrungenen Bauform der Wanne die Gefahr des Reißens des Bodens oder der Wandungen nicht groß war.

Die Erfindung vermeidet die Nachteile des Standes der Technik. Es ist die Aufgabe der Erfindung, eine deutlich einfachere und billigere Anlage zu schaffen und mit einfachen Mitteln energetisch günstiger die Beheizung der Wanne so vorzunehmen, daß erforderliche Temperaturänderungen des Bades mit weniger Trägheit durchgeführt werden können.

Die Erfindung besteht darin, daß die Wanne in einem wärmeisolierten, von heißen Gasen durchströmten Raum untergebracht ist, daß unterhalb der Wanne und/oder an deren Seitenwänden mindestens ein mit Düsen versehenes, brennbares Gas führendes Rohrsystem für die direkte Beheizung der Wanne angeordnet ist, daß oberhalb der Wanne mindestens ein Abzug für verbranntes Gas angeordnet ist, und daß seitlich der Wanne beidseitig und/oder stirnseitig zwischen.der Wanne und der Wärmeisolierung ein Durchgang für verbranntes Gas belassen ist.

Die Unterbringung der langgestreckten, direkt mit Gasbrennern beheizten Wanne in einem geschlossenen Raum, in dem die Verbrennungsgase seitlich an der Wanne vorbeistreichen und erst durch einen Abzug oberhalb der Wanne den Raum verlassen, spart nicht nur Energie für die Beheizung und Temperaturhaltung des Bades, sondern mindert auch die Gefahr der Rißbildung in der Wanne, weil die gesamte Wanne hierbei allseitig und gleichmäßig beheizt wird.

Ist diese Anlage mit Zusatzaggregaten wie z.B. einer Berieselungsvorrichtung, Filtern, Pumpen, Vorratsbehältern ausgestattet, die Teile der in der Wanne befindlichen Flüssigkeit oder Schmelze enthalten, ist es vorteilhaft, wenn mindestens ein mit Düsen versehenes, brennbares Gas führendes Rohrsystem für die direkte Beheizung der Zusatzgeräte vorgesehen ist.

Durch diese direkte Beheizung der das Wärmeträgerbad aufnehmenden Wanne wird mit einfachen Mitteln erreicht, daß die Beheizung der Wanne energetisch günstiger erfolgt, daß erforderliche Temperaturänderungen des Bades durch Drosselung oder temporäre Abschaltung der Gaszufuhr mit weniger Trägheit durchgeführt werden können und daß der Aufbau der Anlage einfacher und damit deutlich billiger wird. Darüber hinaus wird eine nicht unerhebliche Bauraumersparnis erzielt. Damit wird der Wirkungsgrad spürbar erhöht und zusammen gesehen das Kosten-/Nutzenverhältnis bedeutend verbessert.

Wegen ihrer Länge von bis zu 20 Metern ist es zweckmäßig, die Anlage in Achsrichtung der Wanne in Sektionen zu teilen und in jeder Sektion mindestens ein mit Düsen versehenes, brennbares Gas führendes Rohrsystem anzuordnen, dessen Gaszufuhr durch eine der Sektion zugeordnete Meß-, Steuer- und Regelvorrichtung gesteuert ist. Hierdurch ist es möglich, jeder der Sektionen die von ihr individuell benötigte Wärme zur Aufrechterhaltung der erforderlichen Vulkanisationstemperatur zuzuführen.

Da der Wärmebedarf in den einzelnen Sektionen recht unterschiedlich sein kann, weil am Anfang die Profilstränge erst auf Vulkanisationstemperatur gebracht werden müssen und später nur noch auf dieser Temperatur zu halten sind, ist es bei dieser Anlage vorteilhaft, wenn der Innenraum der Anlage durch senkrecht zur Achsrichtung angeordnete Leit- bzw. Trennbleche unterteilt ist, welche vorzugsweise kleiner als der Innenraumquerschnitt sind, damit zwischen den einzelnen Sektionen noch ein wenn auch geringer Wärmeaustausch stattfinden kann.

Bei dieser Anlage sollte die Wanne mit dem aggressiven Wärmeträgerbad gleichmäßig und vorsichtig beheizt werden, damit es nicht zu Spannungen und Verwerfungen der Wanne kommt. Eine direkte Beheizung mit Flammenberührung ist daher nicht vorteilhaft, denn diese führt zu erheblich unterschiedlichen Temperaturen der Wannenoberfläche. Um diese zu vermeiden ist es zweckmäßig, wenn zwischen dem Boden der Wanne und dem unter der Wanne angeordneten mit Düsen versehenen Gasrohrsystem Leit- und/oder Abschirmbleche angeordnet sind, die vorzugsweise gelocht und/oder vorzugsweise in ihrer Lage einstellbar sind.

Bei einer speziellen Anlage dieser Art, bei der in der Wanne ein Trum eines Förderbandes läuft, kann es vorteilhaft sein, wenn der zurücklaufende Trum des Förderbandes, der durch den Raum oberhalb der Wanne verläuft, den aus der Wanne kommenden Strang trägt. Dadurch wird der Raum oberhalb des Bades zusätzlich genutzt. Auch ein weiteres sogenanntes Etagen-Transportband kann in dem Raum oberhalb des Bades zur erneuten Änderung der Transportrichtung und zur noch weiter gehenden Nutzung der hier vorhandenen Wärme angeordnet werden. Vor allem dann, wenn dieser Strang luftunempfindlich ist oder im Bad in der Wanne an seinen Oberflächen soweit vulkanisiert ist, daß er an die Oberflächen herantretende Luft vertragen kann. In dem Raum oberhalb der Wanne wird der Strang auf hohen Temperaturen gehalten, so daß sich die Vulkanisation in den inneren Strangpartien fortsetzen kann. Das eröffnet die Möglichkeit, die Wanne kürzer zu bauen und die oberhalb der Wanne befindlichen heißen Gase weiter zu nutzen.

Auch bei einer weiteren Anlage, bei der in der Wanne feststehende oder aushebbare Tauch- bzw. Leitrollen für das strangförmige Produkt angeordnet sind, ist es zweckmäßig zur Nutzung der oberhalb des Bades befindlichen Wärme, daß im Raum oberhalb der Wanne ein Förderband angeordnet ist, welches den aus der Wanne entnommenen Strang fördert und ihn so weiterer Wärmebehandlung zuführt.

Zur Vergleichmäßigung der Einwirkung der heißen Brenngase auf die Wanne kann es weiter zweckmäßig sein, daß das mit Düsen versehene Rohrsystem in verschiedene Lagen verdrehbar und/oder in seinem Abstand zur Wannenaußenfläche und/oder zum Boden auf verschiedene Abstandswerte einstellbar ist. Eine Veränderung der Stellung des mit den Brenndüsen versehenen Rohrsystems führt zu einer solchen gewünschten Vergleichmäßigung. Auch das zeitweilige Zu- und Abschalten bestimmter Rohrabschnitte kann dafür vorteilhaft sein.

Vorteilhaft kann es auch bei dieser Anlage sein, daß die den Wärmeträger aufnehmende Wanne und das mit Düsen versehene, Gas führende Rohrsystem in einer weiteren aus Blech bestehenden Wanne untergebracht sind, die am Boden mit Verbrennungsluft zuführenden öffnungen versehen ist, welche vorzugsweise mindestens teilweise zur Regelung der Luftzufuhr im Querschnitt veränderlich bzw. verschließbar sind.

Weiter dient es zur Vergleichmäßigung der Wärmezufuhr auf die Wannenoberfläche, wenn die Düsen im Gas führenden Rohrsystem versetzt und oder in ihrer Ausströmrichtung im Winkel versetzt und/oder drehbar angeordnet sind.

Um die Gase bei dieser Anlage auch nach dem Vorbeistreichen an der Wanne noch weiter zur Erwärmung des Bades zu nutzen, ist es vorteilhaft, wenn die verbrannten Gase nach dem Passieren der Seitenflächen der Wanne durch eine Vorrichtung zur Ablenkung der Strömungsrichtung geführt sind, welche sie auf die Oberfläche des Wärmeträgerbades oder den Raum über dieser Oberfläche leitet.

Das Wesen der Erfindung ist nachstehend anhand eines in der Zeichnung schematisch dargestellten Ausführungsbeispieles näher erläutert. Es zeigen:

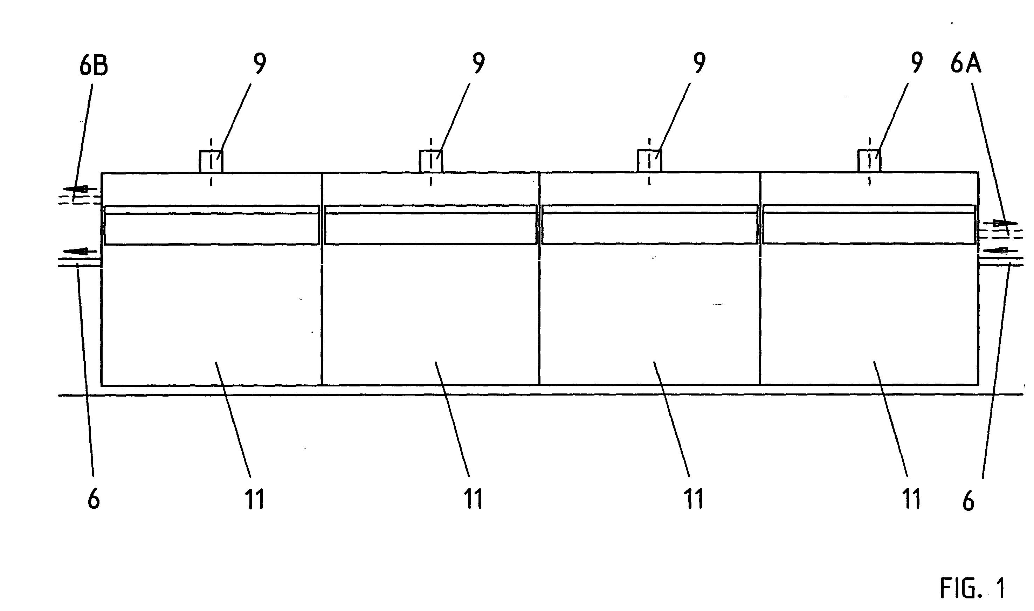

- Fig.1: eine Seitenansicht der Anlage,
- Fig.2: einen Querschnitt durch die Anlage,

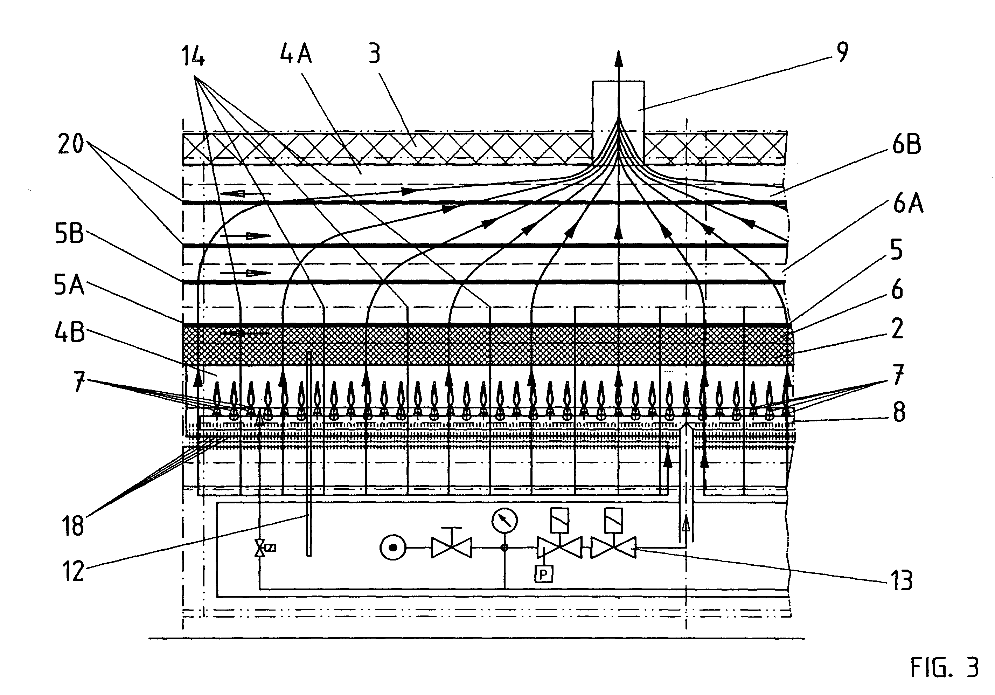

- Fig.3: einen Längsschnitt durch einen Teil einer Sektion dieser Anlage.

Die Anlage zur Wärmebehandlung von Produkten aus Elastomermaterial, insbesondere zur Vulkanisation von strangförmigen Kautschukmischungen, besteht aus einer langgestreckten Wanne 1 zur Aufnahme eines Bades 2 eines flüssigen Wärmeträgers, vorzugsweise eines geschmolzenen Salzes oder einer organischen Flüssigkeit. Die Wanne 1 ist in einem mit einer Wärmeisolierung 3 versehenen, von heißen Gasen durchströmten Raum 4 untergebracht und mit Führungs- und/oder Transportmitteln ausgerüstet. Diese sind durch mindestens ein Transportband 5 und/oder Tauchrollen realisiert, welches bzw. welche die in das Bad 2 eingeführten, zu vulkanisierenden Stränge 6 gegen ein Aufschwimmen an die Oberfläche des Bades 2 hindern und gleichzeitig durch das Bad 2 fördern.

Unterhalb der Wanne 1 ist mindestens ein mit Düsen 7 versehenes, brennbares Gas führendes Rohrsystem 8 angeordnet. Oberhalb der Wanne 1 ist mindestens ein Abzug 9 für verbranntes Gas angeordnet. Seitlich der Wanne ist beidseitig mindestens ein Durchgang 10 für verbranntes Gas belassen.

Diese Anlage ist in Achsrichtung der Wanne 1 in Sektionen 11 geteilt. In jeder Sektion 11 ist mindestens ein mit Düsen 7 versehenes, brennbares Gas führendes Rohrsystem 8 angeordnet, dessen Gaszufuhr durch eine der Sektion 11 zugeordnete Meßvorrichtung 12 und eine Steuer- und Regelvorrichtung 13 gesteuert ist.

Der Innenraum 4 der Anlage ist durch senkrecht zur Achsrichtung angeordnete Leit- und Trennbleche 14 unterteilt, welche vorzugsweise kleiner als der Innenraumquerschnitt sind, damit der Luftaustausch zwischen den durch die Trennbleche 14 abgeteilten Innenraumteilen nicht vollständig unterbunden ist, wohl aber die gewünschte vertikale Brenngasführung erreicht wird.

Zwischen dem Boden der Wanne 1 und dem unter der Wanne 1 angeordneten, mit Düsen 7 versehenen Gasrohrsystem 8 sind Leit- und/oder Abschirmbleche 15 angeordnet, die vorzugsweise gelocht und/oder vorzugsweise in ihrer Lage einstellbar sind. Diese dienen dazu, die Flammen nicht an die Wanne schlagen zu lassen und die durch die Flammen erzeugten Verbrennungsgase möglichst gleichmäßig an die Wannenoberfläche heranzuführen.

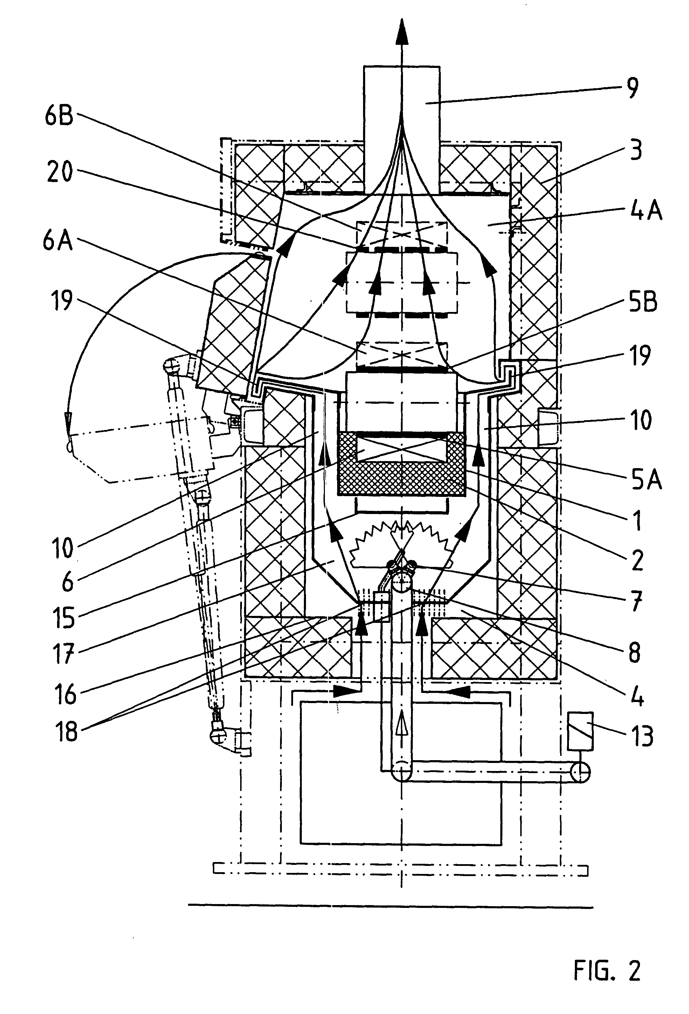

Im Innenraum 4 dieser in Fig.2 dargestellten Anlage läuft in der Wanne 1 ein Trum 5A des angetriebenen Förderbandes 5. Der zurücklaufende Trum 5B des Förderbandes 5 verläuft durch den Raum 4A oberhalb der Wanne 1 und trägt, wenn gewünscht und dafür eingerichtet, den aus der Wanne 1 kommenden Strang durch diesen mit heißen Verbrennungsgasen erfüllten Raum 4A. Wahlweise können die Anlagen mit mindestens einem Transportband und/oder angetriebenen oder nicht angetriebenen Niederhalte- oder Tauchrollen versehen sein.

Das mit Düsen 7 versehene Rohrsystem 8 ist in verschiedene Lagen verdrehbar und/oder in seinem Abstand zum Boden 16 und gegebenenfalls zu weiteren nicht dargestellten mit Düsen versehenen Rohren auf verschiedene Abstandswerte einstellbar.

Die den Wärmeträger aufnehmende Wanne 1 und das mit Düsen 7 versehene, Gas führende Rohrsystem 8 sind zweckmäßigerweise in einer weiteren Wanne 17 untergebracht, die am Boden mit Verbrennungsluft zuführenden Öffnungen 18 versehen ist, welche vorzugsweise mindestens teilweise zur Regelung der Luftzufuhr im Querschnitt veränderbar bzw. verschließbar sind.

Die Düsen 7 im Gas führenden Rohrsystem 8 sind gegenüberliegend versetzt und/oder in ihrer Ausströmrichtung im Winkel versetzt und/oder drehbar angeordnet.

Die verbrannten Gase sind nach dem Passieren der Seitenflächen der Wanne 1 durch mindestens eine Vorrichtung 19 zur Ablenkung der Strömungsrichtung geführt, welche sie auf die Oberfläche des Wärmeträgerbades 1 oder in den Raum über dieser Oberfläche leitet.

Im Anschluß an die aus dem Raum 4A oberhalb des Bades 2 Verbrennungsgase herausführenden Abzügen 9 sind zweckmäßigerweise hier nicht dargestellte Wärmetauscher anzuordnen, die aus den noch heißen Verbrennungsgasen Wärme entziehen und zur Vorheizung von Verbrennungsluft nutzen.

Im Raum 4A oberhalb des Bades 2, der mit heißen Gasen gefüllt ist, befindet sich ein weiteres Transportband 20. Auf diesem liegt der im Vulkanisationsvorgang befindliche, aus dem Bad 2 entnommene und durch den Förderbandtrum 5B in Gegenrichtung geförderte Strang 6A, nachdem dessen Förderrichtung am vorderen Ende des Förderbandes wieder gewechselt wurde und er auf den oberen Trum des Förderbandes 20 gelegt wurde. Dieser Strang 6B verläßt nun in der gleichen Richtung wie der durch das Bad 2 laufende Strangteil 6 die Vulkanisationsanlage.

### Liste der Bezugszeichen

- 1: Wanne
- 2: Bad
- 3: Wärmeisollerung
- 4: Innenraum
- 5: Transportband
- 6: Strang
- 7: Düse
- 8: Rohrsystem
- 9: Abzug
- 10: Durchgang
- 11: Sektion
- 12: Meßvorrichtung
- 13: Steuer- und Regelvorrichtung
- 14: Trennblech
- 15: Leit- und/oder Abschirmblech
- 16: Boden
- 17: Wanne
- 18: Öffnung
- 19: Vorrichtung zur Ablenkung der Strömung
- 20: Transportband

## Patentansprüche

1. Anlage zur Wärmebehandlung von Produkten aus Elastomermaterial, insbesondere zur Vulkanisation von strangförmigen Kautschukmischungen, bestehend aus einer langgestreckten beheizten Wanne (1) zur Aufnahme einer als Wärmeüberträger (2) dienenden Flüssigkeit oder Schmelze, die mit Führungs- und/ oder Transportmitteln (5) für das zu behandelnde Produkt ausgerüstet ist,
**dadurch gekennzeichnet**,
daß die Wanne (1) in einem wärmeisolierten, von heißen Gasen durchströmten Raum (4) untergebracht ist,
daß unterhalb der Wanne (1) und/oder an deren Seitenwänden mindestens ein mit Düsen (7) versehenes, brennbares Gas führendes Rohrsystem (8) für die direkte Beheizung der Wanne angeordnet ist,
daß oberhalb der Wanne (1) mindestens ein Abzug (9) für verbranntes Gas angeordnet ist,
und daß seitlich der Wanne (1) beidseitig und/oder stirnseitig zwischen der Wanne (1) und der Wärmeisolierung (3) ein Durchgang für verbranntes Gas belassen ist.

2. Anlage nach Anspruch 1
**dadurch gekennzeichnet**,
daß mindestens ein mit Düsen (7) versehenes, brennbares Gas führendes Rohrsystem (8) für die direkte Beheizung der Zusatzgeräte vorgesehen ist.

3. Anlage nach Anspruch 1,
**dadurch gekennzeichnet**,
daß die Anlage in Achsrichtung der Wanne (1) in Sektionen (11) unterteilt ist
und in jeder Sektion (11) mindestens ein mit Düsen (7) versehenes, brennbares Gas führendes Rohrsystem (8) angeordnet ist, dessen Gaszufuhr durch eine der Sektion (11) zugeordnete Meß-, Steuerund Regelvorrichtung gesteuert ist.

4. Anlage nach Anspruch 1,
**dadurch gekennzeichnet**,
daß der Innenraum (4) der Anlage durch senkrecht zur Achsrichtung angeordnete Leit- oder Trennelemente (14) unterteilt ist, welche vorzugsweise kleiner als der Querschnitt des Innenraumes (4) sind.

5. Anlage nach Anspruch 1,
**dadurch gekennzeichnet**,
daß zwischen dem Boden der Wanne (1) und dem unter der Wanne (1) angeordneten, mit Düsen versehenen Gasrohrsystem (8) Leit- und/oder Abschirmelemente (15) angeordnet sind, die vorzugsweise gelocht und/oder vorzugsweise in ihrer Lage einstellbar sind.

6. Anlage nach Anspruch 1, bei der in der Wanne (1) ein Trum (5A) eines angetriebenen Förderbandes (5) läuft,
**dadurch gekennzeichnet**,
daß der zurücklaufende Trum (5B) des Förderbandes 5 durch den Raum oberhalb der Wanne (1) verläuft und den aus der Wanne (1) kommenden Strang (6) in Gegenrichtung fördert.

7. Anlage nach Anspruch 1, bei der in der Wanne (1) Niederhalte- oder Tauchrollen für das strangförmige Produkt angeordnet sind,
**dadurch gekennzeichnet**,
daß diese Rollen im Raum oberhalb der Wanne (1) den aus der Wanne (1) entnommenen Strang (6) in Gegenrichtung fördern.

8. Anlage nach Anspruch 1,
**dadurch gekennzeichnet**,
daß im Raum Oberhalb des Förderbandes (5) bzw. der Rollen eine weitere Transporteinrichtung (20) in Form eines Förderbandes oder Förderrollen angeordnet ist, die den Strang (6) nach erneuter Umlenkung (6B) wieder entgegengesetzt (in gleicher Richtung wie der im Bad (2) befindliche Teil des
Stranges (6) ) fördert.

9. Anlage nach Anspruch 1,
**dadurch gekennzeichnet**,
daß das mit Düsen (7) versehene Rohrsystem (8) in verschiedene Lagen verdrehbar und/oder in seinem Abstand zum Boden (16) und/öder zu weiteren Rohrsystemen auf verschiedene Abstandswerte einstellbar ist.

10. Anlage nach Anspruch 1,
**dadurch gekennzeichnet**,
daß die das Wärmeträgerbad (2) aufnehmende Wanne (1) und das mit Düsen (7) versehene, Gas führende Rohrsystem (8) in einer weiteren Wanne (17) untergebracht sind', die am Boden (16) mit Verbrennungsluft zuführenden Öffnungen (18) versehen ist, welche vorzugsweise mindestens teilweise zur Regelung der Luftzufuhr in ihrem Querschnitt veränderbar oder verschließbar sind.

11. Anlage nach Anspruch 1,
**dadurch gekennzeichnet**,
daß die Düsen (7) im Gas führenden Rohr (8) gegenüberliegend versetzt und/oder in ihrer Ausströmrichtung im Winkel versetzt und/oder drehbar angeordnet sind.

12. Anlage nach Anspruch 1,
**dadurch gekennzeichnet**,
daß die verbrannten Gase nach dem Passieren der Seitenflächen der Wanne (1) durch mindestens eine Vorrichtung (19) zur Ablenkung der Strömungsrichtung geführt sind, welche sie auf die Oberfläche des Wärmeträgerbades (2) oder den Raum über dieser Oberfläche leitet.

## Claims

1. Installation for heat treatment of products made of elastomer material, in particular for vulcanisation of extruded rubber mixtures, consisting of an elongated heated tank (1) for accommodating a liquid or melt serving as heat carrier (2) which is equipped with guiding and/or conveying means (5) for the product to be treated, **characterised in that** the tank (1) is housed in a thermally insulated chamber (4) through which hot gases flow, in that at least one pipe system (8) provided with nozzles (7) and carrying combustible gas is located underneath the tank (1) and/or on its side walls for direct heating of the tank, in that at least one outlet (9) for burnt gas is located above the tank (1), and in that a passage for burnt. gas is left beside the tank (1) on both sides and/or they front side between the tank (1) and the thermal insulation (3).

2. Installation according to claim 1, **characterised in that** at least one pipe system (8) provided with nozzles (7) and carrying combustible gas is provided for direct heating of the auxiliary equipment.

3. Installation according to claim 1, **characterised in that** the installation is sub-divided into sections (11) in the axial direction of the tank (1) and in each section (11) there is at least one pipe system (8) which is provided with nozzles (7) and carries combustible gas and the gas supply of which is controlled by a measuring, control and regulating device associated with the section (11).

4. Installation according to claim 1, **characterised in that** the internal chamber (4) of the installation is sub-divided by guiding or separating elements (14) which are arranged perpendicular to the axial direction and are preferably smaller than the cross-section of the internal chamber (4).

5. Installation according to claim 1, **characterised in that** guiding and/or shielding elements (15) which are preferably perforated and/or preferably adjustable in their position, are located between the bottom of the tank (1) and the gas pipe system (8) provided with nozzles and located under the tank (1).

6. Installation according to claim 1, in which one side (5A) of a driven conveyor belt (5) runs in the tank (1), **characterised in that** the returning side (5B) of the conveyor belt (5) runs through the chamber above the tank (1) and conveys the extrusion (6) coming out of the tank (1) in the opposite direction.

7. Installation according to claim 1, in which holddown or immersion rollers for the extruded product are arranged in the tank (1), **characterised in that** these rollers in the chamber above the tank (1) convey the extrusion (6) removed from the tank (1) in the opposite direction.

8. Installation according to claim 1, **characterised in that** in the chamber above the conveyor belt (5) or the rollers there is a further conveying device (20) in the form of a conveyor belt or conveyor rollers which conveys the extrusion (6) after renewed deflection (6B) in the opposite direction again (in the same direction as the part of the extrusion (6) in the bath (2)).

9. Installation according to claim 1, **characterised in that** the pipe system (8) provided with nozzles (7) can be turned into different positions and/or adjusted to different distance values in its distance from the bottom (16) and/or from further pipe systems.

10. Installation according to claim 1, **characterised in that** the tank (1) accommodating the heat carrier bath (2) and the pipe system (8) provided with nozzles (7) and carrying gas are housed in a further tank (17) which is provided at the bottom (16) with openings (18) which supply combustion air and which are preferably at least partly adjustable in their cross-section or closable to regulate the supply of air.

11. Installation according to claim 1, **characterised in that** the nozzles (7) in the pipe (8) carrying gas are arranged offset lying opposite one another and/or angularly offset in their outlet direction and/or rotatable.

12. Installation according to claim 1, **characterised in that** after passing over the side surfaces of the tank (1) the burnt gases are guided by at least one device (19) for deflection of the direction of flow which directs them at the surface of the heat carrier bath (2) or the chamber above this surface.

## Revendications

1. Installation pour traiter par chauffage des produits en matière élastomère, en particulier pour la vulcanisation de mélanges de caoutchouc en forme de profilés continus,
constituée d'une cuve (1) étendue en longueur, chauffée, qui reçoit un liquide ou un bain de fusion servant d'échangeur de chaleur (2) et qui est équipée de moyens de guidage et/ou de transport (5) pour le produit à traiter,
caractérisée par le fait
que la cuve (1) est logée dans un espace (4) thermiquement isolé, parcouru par des gaz chauds,
qu'au-dessous de la cuve (1) et/ou contre ses parois latérales est disposé au moins un réseau tubulaire (8), muni de buses (7), amenant du gaz combustible, pour le réchauffage direct de la cuve, qu'au-dessus de la cuve (1) est disposée au moins une évacuation (9) pour les gaz de combustion,
et que latéralement à la cuve (1), des deux côtés et/ou frontalement, entre la cuve (1) et I'isolant thermique (3) est laissé un passage pour les gaz de combustion.

2. Installation selon la revendication 1,
caractérisée par le fait
qu'est prévu au moins un réseau tubulaire (8), muni de buses (7), amenant du gaz combustible, pour le réchauffage direct des appareils complémentaires.

3. Installation selon la revendication 1,
caractérisée par le fait
que, selon la direction de l'axe de la cuve (1), l'installation est divisée en sections (11)
et que dans chaque section (11) est disposé un réseau tubulaire (8), muni de buses (7), amenant du gaz combustible, dont l'amenée de gaz est commandée par un dispositif de mesure, de commande et de régulation associé à la section (11).

4. Installation selon la revendication 1,
caractérisée par le fait
que l'espace intérieur (4) de l'installation est divisé par des éléments de guidage ou de séparation (14) qui sont disposés perpendiculairement à la direction de l'axe et qui de préférence sont plus petits que la section de l'espace intérieur (4).

5. Installation selon la revendication 1,
caractérisée par le fait
qu'entre le fond de la cuve (1) et le réseau tubulaire de gaz (8), disposé sous la cuve (1), muni de buses, sont disposés des éléments de guidage et/ou de protection (15) qui sont de préférence perforés et/ou de préférence réglables en position.

6. Installation selon Ia revendication 1, dans le cas de laquelle un brin (5A) d'un tapis transporteur entraîné (5) passe dans la cuve (1),
caractérisée par le fait
que le brin de retour (58) du tapis transporteur (5) passe par l'espace situé au-dessus de la cuve (1) et transporte en sens opposé le profilé continu (6) provenant de la cuve (1).

7. Installation selon la revendication 1, dans le cas de laquelle dans la cuve (1) sont disposés des rouleaux maintenant immergé le produit en forme de profilé continu, ou rouleaux immergés,
caractérisée par le fait
que ces rouleaux transportent en sens opposé, dans l'espace situé au-dessus de la cuve (1), le profilé continu (6) sorti de la cuve (1).

8. Installation selon la revendication 1,
caractérisée par le fait
que dans l'espace situé au-dessus du tapis transporteur (5) ou des rouleaux est disposé un autre appareil de transport (20), sous forme d'un tapis transporteur ou de rouleaux transporteurs, qui, après un nouveau changement de direction (6B), transporte à nouveau le profilé continu (6) en sens opposé (dans le même sens que la partie du profilé continu (6) qui se trouve dans le bain (2)).

9. Installation selon la revendication 1,
caractérisée par le fait
que le réseau tubulaire (8) muni de buses (7) peut se contourner selon différentes positions et/ou se régler à des distances différentes du fond (16) et/ou des autres systèmes tubulaires.

10. Installation selon la revendication 1,
caractérisée par le fait
que la cuve (1) qui reçoit le bain caloporteur (2) et le réseau tubulaire (8) muni de buses (7) amenant le gaz sont logés dans une autre cuve (17) dont le fond (16) présente des ouvertures (18) qui amènent l'air de combustion et qui de préférence peuvent au moins partiellement se modifier ou s'obturer pour la régulation de l'amenée d'air.

11. Installation selon la revendication 1,
caractérisée par le fait
que les buses (7) sont décalées vis-à-vis l'une de l'autre dans le tube (8) amenant le gaz et/ou décalées angulairement en direction d'émission et/ou disposées avec liberté de rotation.

12. Installation selon la revendication 1,
caractérisée par le fait
qu'après être passés le long des surfaces latérales de la cuve (1), les gaz de combustion sont guidés, par au moins un dispositif (19) qui est prévu pour dévier la direction de leur écoulement et les envoie sur la surface du bain caloporteur (2) ou dans l'espace situé au-dessus de cette surface.
